# EUROPEAN PATENT SPECIFICATION

(11) **EP 2 243 214 B1**
(45) Date of publication and mention of the grant of the patent: **07.12.2016**
(21) Application number: 09712911.8
(22) Date of filing: 23.02.2009
(51) Int. Cl.: H02P 3/22, H02P 21/14, H02P 21/36

(54) **METHOD AND SYSTEM FOR BRAKING AN AC MOTOR**
BREMSSYSTEM UND -VERFAHREN FÜR EINEN WECHSELSTROMMOTOR
PROCÉDÉ ET SYSTÈME POUR FREINER UN MOTEUR À COURANT ALTERNATIF

(30) Priority: 21.02.2008 US 30342; 20.02.2009 US 389935
(43) Date of publication of application: 27.10.2010
(73) Proprietor: Siemens Aktiengesellschaft, 80333 München (DE)
(72) Inventor: OSMAN, Richard H., Pittsburgh Pennsylvania 15239 (US); RASTOGI, Mukul, Murrysville Pennsylvania 15668 (US)
(74) Representative: Maier, Daniel Oliver
(86) International application number: PCT/US2009/001137
(87) International publication number: WO 2009/105276

(56) References cited:
- EP-A- 1 162 726
- JP-A- 8 317 678
- US-A1- 2004 160 208
- US-A1- 2007 035 263

## Description

### CROSS REFERENCE TO RELATED APPLICATIONS

### NOT APPLICABLE

### BACKGROUND

This application discloses an invention that is related, generally and in various embodiments, to a method and system for braking an AC motor. More specifically, this application is related to braking an AC motor with a variable frequency drive.

A variable frequency drives are typically devices used to control the rotational speed of an alternating current (AC) motor by controlling the frequency of electrical power delivered to the motor. For example, variable frequency drives, and accompanying control circuits, are described in detail in U.S. Patent No. 7,327,111 to Rastogi et al., the disclosure of which is hereby fully incorporated by reference.

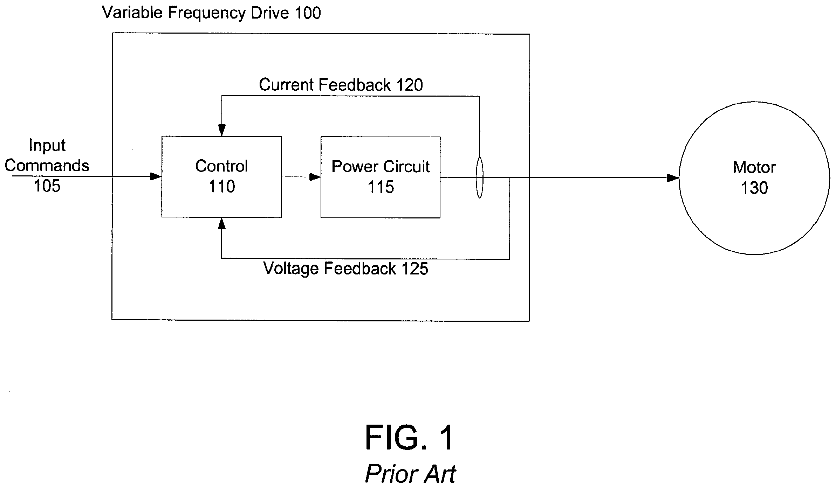

FIG. 1 illustrates an exemplary variable frequency drive **100** for providing electrical power to motor **130.** Variable frequency drive **100** includes a control circuit **110** and a power circuit **115.** Control circuit **110** receives incoming input commands **105.** Input commands **105** may be a request to increase or decrease the speed of the motor **130,** which requires variable frequency drive **100** to adjust the electrical power output by power circuit **115** and delivered to motor **130.** Control circuit **110** monitors current feedback **120** and voltage feedback **125** from the outputted electrical power to determine if any changes should be made to the output to either adjust or maintain conditions at motor **130.** For synchronous motor applications, the variable frequency drive may also include a field supply. The control circuit controls the operation of the power circuit and, for synchronous motor applications, also enables/disables the associated field supply. The power circuit may include a rectifier and an inverter, and provides power to the windings of motor **130** connected to the variable frequency drive **100.** For synchronous motor applications, the field supply provides power to an exciter for a motor field circuit.

Control circuit **110** typically includes a speed regulator, a flux regulator, a magnetizing current regulator, a torque current regulator, a DQ-3Φ transform, a pulse width modulator, and a motor model. The speed regulator provides a torque current reference, and the flux regulator provides a magnetizing current reference. The control circuit compares the magnetizing current reference to a measured magnetizing current, and the magnetizing current regulator determines a Q-axis voltage reference. The control circuit also compares the torque current reference to a measured torque current, and the torque current regulator determines a D-axis voltage reference. Additional feed-forward signals may be added to the D-axis voltage reference and the Q-axis voltage reference to provide a higher dynamic response. The DQ-3Φ transform transforms the Q-axis voltage reference and the D-axis voltage reference from two-phase information into three-phase values. The pulse width modulator converts the three-phase values to switching commands that are sent to the power circuit. The motor model generally utilizes measured voltage and/or current signals to determine motor parameters such as the motor speed, the motor flux, the motor flux angle, etc. For applications where low cost is a business requirement, the motor model may only utilize the variable frequency drive output current or the motor current to determine motor parameters. The motor model also converts measured currents into a magnetizing current component and a torque current component for use in the magnetizing current regulator and the torque current regulator, respectively. The D-axis is aligned with the stator flux.

Many of the functions performed by the control circuit **110** are implemented in software. The software is written such that calculations are done at two or more different rates so as to save processor execution time. In general, the pulse width modulator operates at the fastest rate and is usually implemented in hardware. The magnetizing current regulator, the torque current regulator, and the DQ-3Φ transform blocks are typically executed at a data rate of 1 - 10 kilohertz so that a fast response of the control is achieved in limiting the output current of the variable frequency drive in case of sudden changes in the load or the output circuit. The speed regulator and the flux regulator typically operate at a slower rate of 100 - 1000 hertz because both motor speed and motor flux change at a much slower rate than the magnetizing current and the torque current. The motor model also is usually computed at this rate. Communications from the control circuit to the outside world, which includes communications to an external device (from the customer), is typically at a rate of 1 - 10 hertz.

In applications where infrequent, but fast, braking of the motor is required, a 4-quadrant drive connected to the motor may be utilized to realize the braking. However, the relatively high cost associated with a 4-quadrant drive renders this approach infeasible for some of such applications.

US 2004/0160208 discloses a motor control apparatus for quickly braking an AC motor by absorbing overcurrent produced by the motor in a series of braking resistors by shorting the motor to the braking resistors via a series of brake relays.

The present invention provides a system for braking a motor, comprising at least one resistor, a contactor connected to the at least one resistor and a motor and a variable frequency drive electrically connected to the motor. The variable frequency drive comprises a controller operably connected to the contactor, wherein at least a portion of the contactor closes connecting the at least one resistor to the motor in response to a command from the controller, and wherein variable frequency drive is configured to maintain a high level of motor flux until a motor torque level of approximately zero is output by the motor.

The present invention also provides a method for braking a motor, the method comprising detecting, by a variable frequency drive, a reduction in speed demand, wherein the reduction initiates deceleration of a motor; issuing a command by the variable frequency drive to close at least one contactor, wherein the closed contactor connects a resistor bank to the motor; issuing a command by the variable frequency drive to maintain a high level of motor flux until a level of motor torque output by the motor is approximately zero; and absorbing, by the resistor bank, deceleration current generated by the motor.

Various embodiments of the invention are described herein by way of example in conjunction with the following figures.
FIG. 1 illustrates an exemplary variable frequency drive.
FIG. 2 illustrates various embodiments of a system for braking an AC motor.
FIG. 3 illustrates various embodiments of the variable frequency drive of FIG. 1.
FIG. 4 illustrates various embodiments of a method for braking an AC motor.
FIG. 5 illustrates exemplary waveforms generated during the deceleration of an AC motor.
FIG. 6 illustrates a plot of resistor current through one of the phases during the deceleration corresponding to FIG. 5.

### DETAILED DESCRIPTION

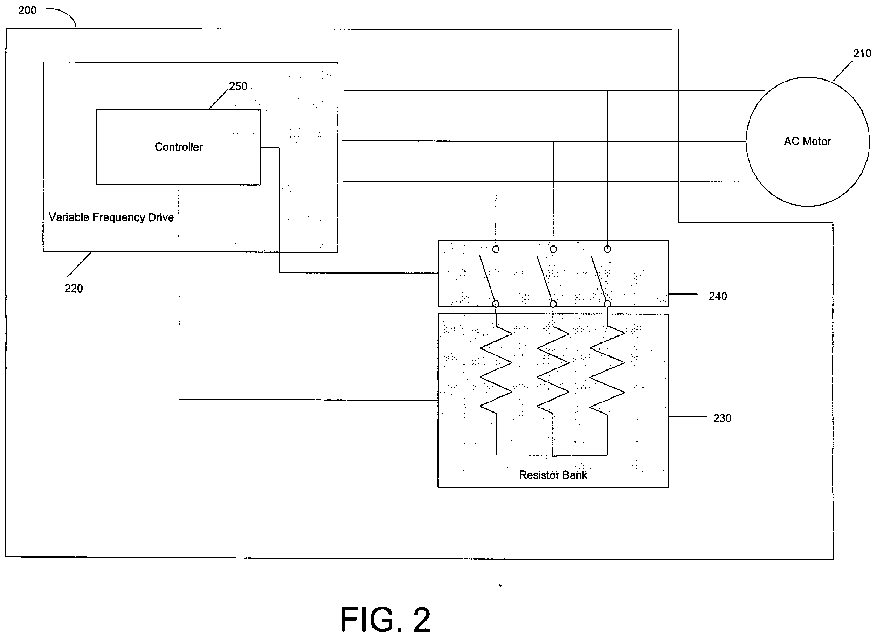

FIG. 2 illustrates various embodiments of a system **200** for braking an AC motor **210.** The system **200** includes a variable frequency drive **220,** a resistor bank **230** and a three-phase contactor **240** connected to the variable frequency drive **220.** As discussed above, the variable frequency drive **220** may be configured to control the rotation of AC motor **210** by controlling the frequency of the electrical power supplied to the AC motor. The variable frequency drive **220** may include a controller **250** connected to the contactor **240.** Any 3-phase AC drive that is equipped with a motor control algorithm as is discussed herein may be used as the variable frequency drive **220.** The variable frequency drive **220** may increase motor flux at low speeds to increase the energy dissipated in the resistor bank **230,** thereby allowing faster deceleration. In various embodiments, a three-phase contactor **240** may be used to connect the resistor bank **220** to the AC motor **210** when braking is required. Control of the contactor **240** may be established through the variable frequency drive **220.**

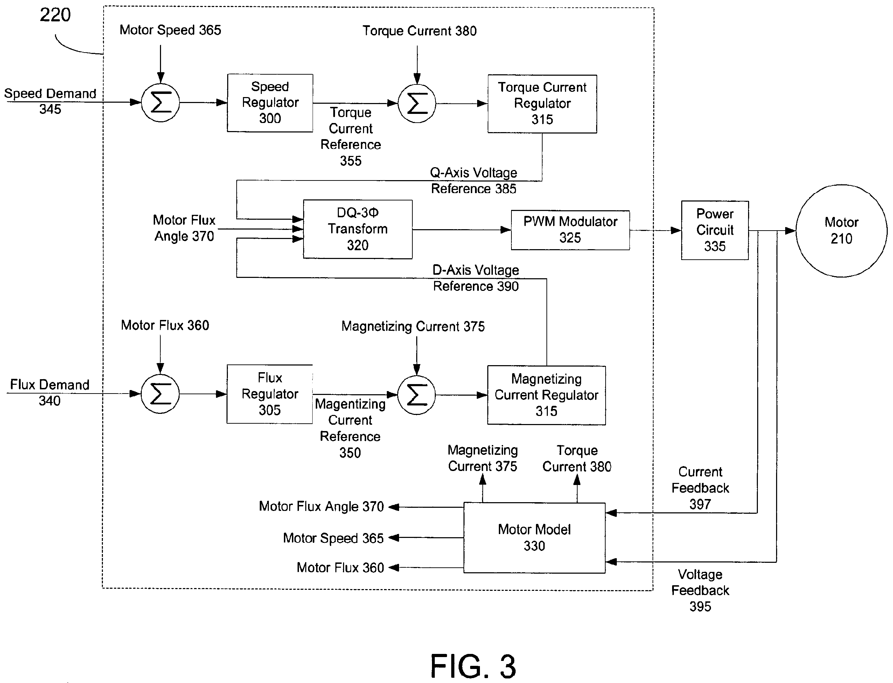

FIG. 3 illustrates various embodiments of the variable frequency drive **220** of FIG. 2. The variable frequency drive **220** may comprise a speed regulator **300,** a flux regulator **305,** a magnetizing current regulator **310,** a torque current regulator **315,** a DQ-3Φ transform **320,** a pulse width modulator **325** and a motor model **330.** Each component will be described in more detail below.

As illustrated, the variable frequency drive **220** may receive the flux demand **340** and the speed demand **345** as inputs. In various embodiments, the flux regulator **305** compensates for the difference between the flux reference and the flux feedback. The flux demand **340** and the actual motor flux **360** as provided by the motor model **330** may be compared by the flux regulator **305.** The output of the flux regulator **305,** as determined based upon the comparison of the flux demand **340** and the actual motor flux **360,** may be the motor magnetizing current reference **350.**

In various embodiments, the speed regulator **300** may compare the speed demand **345** with the motor speed **365** as provided by the motor model **330** and provides the motor torque current reference **355** as an output. In certain embodiments, where the speed demand **345** is less than the actual motor speed **365,** thereby indicating a desire to brake the AC motor **210,** speed regulator **300** may output a torque current reference **355,** thereby indicating the voltage commands being transmitted to the motor may be reduced in order to facilitate braking of the motor.

In various embodiments, the motor model **330** uses the voltage feedback **395** and current feedback **397** from the variable frequency drive **220** output to estimate the motor flux **360,** the motor speed **365** and the motor flux angle **370.** In addition, the motor model **330** may also determine the magnetizing current **375** and the torque current **380.** The motor model **330** may be a processor having a memory with a stored set of instructions. Based upon the received voltage feedback **395** and current feedback **397,** the motor model may process the feedback information according to the stored instructions to create estimated values for various aspects of AC motor **210,** specifically in this example, motor flux **360,** motor speed **365,** motor flux angle **370,** magnetizing current **375,** and torque current **380.**

The magnetizing current regulator **310** may compare the magnetizing current reference **350** with the magnetizing current **375** as provided by the motor model **330** to produce a D-axis voltage reference **390.** Similarly, the torque current regulator **315** may compare the torque current reference **355** with the torque current **380** as output by the motor model **330** to produce a Q-axis voltage reference **385.** Both D-axis voltage reference **390** and Q-axis voltage reference **385** may be transformed into a single phase voltage signal at DQ-3Φ transform **320.** The DQ-3Φ transform **320** may be a mathematical algorithm implemented in software, programmed to operate on the motor flux **370,** the magnetizing current **375,** and the torque current **380,** decomposing the current signals into components parallel to the motor flux (D-axis) and in quadrature to the motor flux (Q-axis). DQ-3Φ transform **320** may further transform the single phase voltage signal into a three-phase voltage single based upon motor flux angle **370.** The three-phase voltage signal may be used as a reference for pulse width modulator **325** to generate a pulse width modulator voltage command for controlling semiconductor devices in the power circuit **335.**

It should be noted that the components of variable frequency drive **220** may be implemented on a single processor operably connected to a memory for storing various instructions related to a method for braking a motor. Specifically, the variable frequency drive may receive flux demand **340** and speed demand **345** as inputs, process the information as discussed above to produce the three-phase voltage signal, and based upon the value of this signal, load appropriate instructions from the memory for altering the operation of the AC motor **210.**

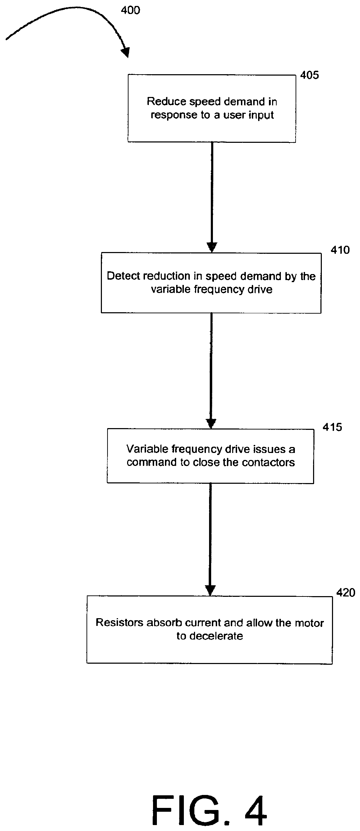

FIG. 4 illustrates various embodiments of a method **400** for braking an AC motor. The system **200** as discussed above in FIG. 1 and the variable frequency drive **220** as discussed in detail in FIG. 2 may be utilized to implement the method **400.** The process flow of the method **400** begins when, in response to a user input, the speed demand **345** may be reduced **405** to initiate a speed reduction request for AC motor **210.** Upon reduction **405** of the speed demand **345,** variable frequency drive **220** may detect **410** the change in speed demand as a result of the comparison of motor speed **365** and speed demand made by speed regulator **300.** This comparison may result in a negative torque current reference **355,** indicating appropriate instructions should be produced or loaded from memory to initiate braking AC motor **210.** Based upon the magnitude of the difference in the speed demand **345** and the motor speed **365,** a command (e.g., the output of pulse width modulation modulator **325**) may be produced to be sent from the variable frequency drive **220** to contactor **240.**

After detecting the reduction **410** in the speed demand **345** and producing a command, the variable frequency drive **220** issues **415** the command to the three-phase contactor **240** to connect the resistor bank **230** to the AC motor **210.** It should be noted that an approximately balanced resistor bank **230** may be used to limit any fluctuations in motor torque across phases. In some applications where a high level of potential motor torque fluctuations may be acceptable during braking, two phases of the three-phase contactor **240** may be closed, thereby only connecting a portion of the resistor bank **230** to the AC motor **210.**

As the three-phase contactor **240** connects the resistor bank **230** to the AC motor **210,** the variable frequency drive **220** may also begin to decrease the torque current **380** to its reverse regeneration limit. It should be noted that after torque current **380** is decreased, and motor speed **365** begins to drop, variable frequency drive **220** may maintain motor flux **360** at a higher value until motor torque reaches approximately zero. In various embodiments, other 2-quadrant drives may be used provided the controller provides fast regulation of the drive current and maintains motor flux during the deceleration process.

After issuing **415** the command to the contactor **240** to connect the resistor bank **230** to the AC motor **210,** the resistors now operably connected to the AC motor absorb **420** any current generated by the AC motor resulting in the deceleration of the AC motor. While the variable frequency drive **220** may operate at a small value of regenerative current, the resistors **230** may be able to absorb a significant amount of reverse torque current and allow the AC motor **210** to quickly decelerate. As the variable frequency drive **220** may maintain motor flux **360** during the deceleration process, the motor voltage may decrease linearly with speed.

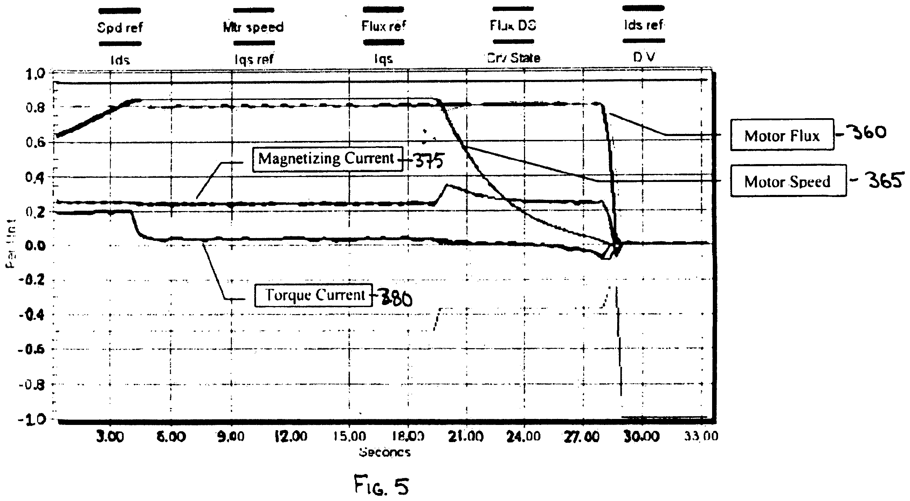

FIG. 5 illustrates exemplary waveforms generated during the deceleration of an AC motor, specifically illustrating motor flux **360,** motor speed **365,** magnetizing current **375** and torque current **380** as discussed above in FIG. 3. For this implementation, the AC motor was a 4160V, 600hp induction motor, and the deceleration was realized using a 2-quadrant variable frequency drive and a 3-phase resistor bank. The resistor bank was sized to operate with a 90% current at a rated motor voltage (e.g., 67 amperes), and deceleration from full speed to zero was completed in less than nine seconds. The variable frequency drive was able to maintain stable operation (as indicated by a stable value for motor flux **360**) during deceleration despite the change in impedance caused by the connection of the resistors as well as the change in torque current **380.** The variable frequency drive was also be able to adequately limit the output current without causing any over-voltage trips in the cells as indicated by the relatively stable values for magnetizing current **375** and torque current **380** while motor flux **365** and motor speed **370** are decreasing quickly, which indicates that the variable frequency drive did not absorb any more power than its normal capability, and that the additional braking power from the motor was dissipated in the resistors.

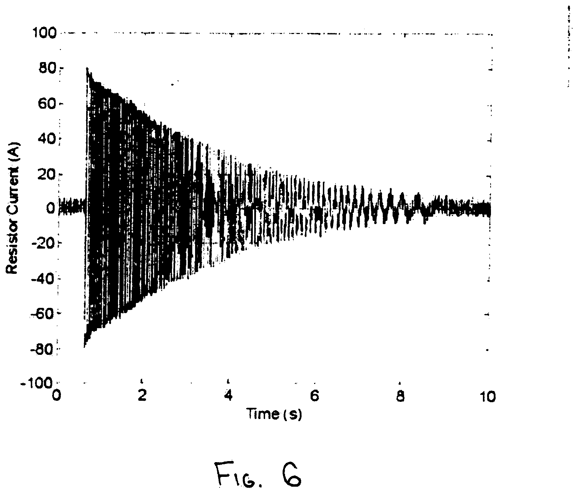

FIG. 6 illustrates a plot of resistor current through one of the phases during the deceleration corresponding to FIG. 5. According to various embodiments, as the motor slows downs, the voltage across its terminals may also decrease, thereby decreasing the current through the resistors and reducing braking torque. As the variable frequency drive is connected to the motor during the deceleration process, the variable frequency drive may be controlled to apply extra voltage to the motor as its speed decreases. For example, a typical motor can tolerate 10% more voltage at a rated speed. If 10% more voltage is applied at all speeds below the rated value, then the motor may provide 21 % (or 1.1² = 1.21) more braking torque. At lower speeds, the motor core losses are relatively low compared to copper losses. As such, the motor flux may be increased above 10% of the typical value so that higher braking torque may be produced. Higher braking torque may result in a significant reduction in the total time required to stop the motor. It should be noted that the example described above, when used during infrequent braking, it may be possible to raise the motor flux significantly for the duration of a braking interval without motor overheating.

While several embodiments of the invention have been described herein by way of example, those skilled in the art will appreciate that various modifications, alterations and adaptations to the described embodiments may be realized without departing from the scope of the invention. For example, although the method **400** is described with reference to a particular sequence, those skilled in the art will appreciate that some steps may occur in a different sequence, some steps may occur concurrently with other steps, and some steps may occur on a periodic or continuous basis.

## Claims

1. A system for braking a motor, comprising:
at least one resistor (230);
a contactor (240) connected to the at least one resistor and a motor (210); and
a variable frequency drive (220) electrically connected to the motor, wherein the variable frequency drive comprises a controller (250) operably connected to the contactor, wherein at least a portion of the contactor closes connecting the at least one resistor to the motor in response to a command from the controller, and wherein variable frequency drive is configured to maintain a high level of motor flux until a motor torque level of approximately zero is output by the motor.

2. The system of claim 1, wherein the variable frequency drive further comprises a motor model (330) that receives voltage feedback (395) and current feedback (397) from the variable frequency drive, processes the voltage feedback and current feedback, and outputs motor flux (360), motor speed (365), magnetizing current (375), torque current and motor flux angle (370).

3. The system of claim 2, wherein the variable frequency drive further comprises a speed regulator (300) configured to process the motor speed and producing a reference torque current (355).

4. The system of claim 3, wherein the variable frequency drive further comprises a flux regulator (305) configured to process the motor flux and produce a reference magnetizing current (350).

5. The system of claim 4, wherein the variable frequency drive further comprises a torque current regulator (315) configured to process both the reference torque current and the torque current (380) and produce a reference Q-Axis voltage (385) as well as a magnetizing current regulator (310) configured to process both the reference magnetizing current and the magnetizing current (375) and produce a reference D-Axis voltage (390).

6. The system of claim 5, wherein the variable frequency drive further comprises a DQ-3Φ transform (320) configured to process both the reference Q-Axis voltage and the reference D-Axis voltage to produce a three phase electrical output.

7. The system of claim 6, wherein the variable frequency drive further comprises a pulse width modulation modulator (325) configured to produce pulse width modulated voltage commands.

8. The system according to any preceding claim, wherein the at least one resistor comprises a resistor bank (230) having a plurality of phases, and the contactor has a plurality of phases, wherein each phase of the contactor is connected to one phase of the resistor bank.

9. The system of any preceding claim, wherein the contactor is a three-phase contactor.

10. The system of claim 9, wherein the at least one resistor is a three-phase resistor bank.

11. The system of any preceding claim, wherein controller commands instruct the contactor to close, thereby connecting the resistor bank to the motor.

12. A method for braking a motor (210), the method comprising:
detecting, by a variable frequency drive (220), a reduction in speed demand (345), wherein the reduction initiates deceleration of a motor;
issuing a command by the variable frequency drive to close at least one contactor (240), wherein the closed contactor connects a resistor bank (230) to the motor;
issuing a command by the variable frequency drive to maintain a high level of motor flux until a level of motor torque output by the motor is approximately zero; and
absorbing, by the resistor bank, deceleration current generated by the motor.

13. The method of claim 12, wherein the issuing a command comprises issuing a command by the variable frequency drive to close at least two phases of a three-phase contactor (240), wherein the at least two closed phases of the three-phase contactor connect at least two phases of a resistor bank (230) to the motor.

14. The method of claim 13, wherein a determination to close the three-phase contactor is made by the variable frequency drive based upon the detected reduction in speed demand.

## Patentansprüche

1. Bremssystem für einen Motor mit:
mindestens einem Widerstand (230),
einem Schütz (240), das mit dem mindestens einen Widerstand und einem Motor (210) verbunden ist, und
einem Frequenzumrichter (220), der mit dem Motor elektrisch verbunden ist, wobei der Frequenzumrichter eine Steuerung (250) umfasst, die mit dem Schütz wirkverbunden ist, wobei als Reaktion auf einen Befehl der Steuerung zumindest ein Abschnitt des Schützes schließt und den mindestens einen Widerstand mit dem Motor verbindet, und der Frequenzumrichter so konfiguriert ist, dass er ein hohes Maß an Motorfluss aufrechterhält, bis ein Motordrehmoment von etwa null von dem Motor abgegeben wird.

2. System nach Anspruch 1, bei dem der Frequenzumrichter ferner ein Motormodell (330) umfasst, das Spannungsrückführung (395) und Stromrückführung (397) vom Frequenzumrichter empfängt, die Spannungs- und die Stromrückführung verarbeitet und den Motorfluss (360), die Motordrehzahl (365), den Magnetisierungsstrom (375), den Drehmomentstrom und den Motorflusswinkel (370) ausgibt.

3. System nach Anspruch 2, bei dem der Frequenzumrichter ferner einen Drehzahlregler (300) umfasst, der so konfiguriert ist, dass er die Motordrehzahl verarbeitet, und einen Referenzdrehmomentstrom (355) erzeugt.

4. System nach Anspruch 3, bei dem der Frequenzumrichter ferner einen Flussregler (305) umfasst, der so konfiguriert ist, dass er den Motorfluss verarbeitet und einen Referenzmagnetisierungsstrom (350) erzeugt.

5. System nach Anspruch 4, bei dem der Frequenzumrichter ferner einen Drehmomentstromregler (315), der so konfiguriert ist, dass er sowohl den Referenzdrehmomentstrom als auch den Drehmomentstrom (380) verarbeitet und eine Referenzspannung (385) der Q-Achse erzeugt, sowie einen Magnetisierungsstromregler (310) umfasst, der so konfiguriert ist, dass er sowohl den Referenzmagnetisierungsstrom als auch den Magnetisierungsstrom (375) verarbeitet und eine Referenzspannung (390) der D-Achse erzeugt.

6. System nach Anspruch 5, bei dem der Frequenzumrichter ferner eine DQ-3Φ-Transformation (320) umfasst, die so konfiguriert ist, dass sie sowohl die Referenzspannung der Q-Achse als auch die Referenzspannung der D-Achse verarbeitet und eine Drehstromleistung erzeugt.

7. System nach Anspruch 6, bei dem der Frequenzumrichter ferner einen Pulsbreitenmodulator (325) umfasst, der so konfiguriert ist, dass er pulsbreitenmodulierte Spannungsbefehle erzeugt.

8. System nach einem der vorhergehenden Ansprüche, bei dem der mindestens eine Widerstand einen Widerstandsblock (230) mit mehreren Phasen umfasst und das Schütz mehrere Phasen aufweist, wobei jede Phase des Schützes mit einer Phase des Widerstandsblocks verbunden ist.

9. System nach einem der vorhergehenden Ansprüche, bei dem es sich bei dem Schütz um ein Drehstromschütz handelt.

10. System nach Anspruch 9, bei dem es sich bei dem mindestens einen Widerstand um einen Drehstrom-Widerstandsblock handelt.

11. System nach einem der vorhergehenden Ansprüche, bei dem Steuerbefehle das Schütz anweisen zu schließen, wodurch der Widerstandsblock mit dem Motor verbunden wird.

12. Bremsverfahren für einen Motor (210), das Folgendes umfasst:
Erkennen einer Verringerung der Solldrehzahl (345) durch einen Frequenzumrichter (220), wobei die Verringerung ein Abbremsen eines Motors auslöst,
Ausgeben eines Befehls zum Schließen mindestens eines Schützes (240) durch den Frequenzumrichter, wobei das geschlossene Schütz einen Widerstandsblock (230) mit dem Motor verbindet,
Ausgeben eines Befehls zum Aufrechterhalten eines hohen Maßes an Motorfluss durch den Frequenzumrichter, bis ein von dem Motor abgegebenes Motordrehmoment etwa null ist, und
Aufnehmen eines vom Motor erzeugten Abbremsstroms durch den Widerstandsblock.

13. Verfahren nach Anspruch 12, bei dem das Ausgeben eines Befehls das Ausgeben eines Befehls zum Schließen von mindestens zwei Phasen eines Drehstromschützes (240) durch den Frequenzumrichter umfasst, wobei die mindestens zwei geschlossenen Phasen des Drehstromschützes mindestens zwei Phasen eines Widerstandsblocks (230) mit dem Motor verbinden.

14. Verfahren nach Anspruch 13, bei dem eine Bestimmung des Frequenzumrichters, das Drehstromschütz zu schließen, auf der Grundlage der erkannten Verringerung der Solldrehzahl erfolgt.

## Revendications

1. Système de freinage d'un moteur, comprenant :
au moins une résistance (230) ;
un contacteur (240) relié à l'au moins une résistance et à un moteur (210), et
un entraînement à fréquence variable (220) relié électriquement au moteur, étant entendu que l'entraînement à fréquence variable comprend un contrôleur (250) relié fonctionnellement au contacteur, qu'au moins une partie du contacteur se ferme pour relier l'au moins une résistance au moteur en réaction à une commande du contrôleur et que l'entraînement à fréquence variable est configuré pour maintenir un niveau élevé de flux de moteur jusqu'à ce qu'un couple moteur de niveau approximativement nul soit sorti par le moteur.

2. Système selon la revendication 1, dans lequel l'entraînement à fréquence variable comprend par ailleurs un modèle (330) de moteur qui reçoit de l'entraînement à fréquence variable une contre-réaction de tension (395) et une contre-réaction d'intensité (397), traite la contre-réaction de tension et la contre-réaction d'intensité, et sort un flux (360) de moteur, une vitesse (365) de moteur, un courant magnétisant (375), un courant de couple et un angle (370) de flux de moteur.

3. Système selon la revendication 2, dans lequel l'entraînement à fréquence variable comprend par ailleurs un régulateur de vitesse (300) configuré pour traiter la vitesse du moteur et pour produire une référence (355) de courant de couple.

4. Système selon la revendication 3, dans lequel l'entraînement à fréquence variable comprend par ailleurs un régulateur (305) de flux configuré pour traiter le flux de moteur et pour produire une référence (350) de courant magnétisant.

5. Système selon la revendication 4, dans lequel l'entraînement à fréquence variable comprend par ailleurs un régulateur (315) de courant de couple configuré pour traiter à la fois la référence de courant de couple et le courant de couple (380), et pour produire une référence (385) de tension d'axe Q, ainsi qu'un régulateur (310) de courant magnétisant configuré pour traiter à la fois la référence de courant magnétisant et le courant magnétisant (375), et pour produire une référence (390) de tension d'axe D.

6. Système selon la revendication 5, dans lequel l'entraînement à fréquence variable comprend par ailleurs une transformée DQ-triphasée (320) configurée pour traiter à la fois la référence de tension de l'axe Q et la référence de tension de l'axe D afin de produire une sortie électrique triphasée.

7. Système selon la revendication 6, dans lequel l'entraînement à fréquence variable comprend par ailleurs un modulateur (325) à modulation en largeur d'impulsions configuré pour produire des commandes de tension modulées en largeur d'impulsions.

8. Système selon l'une quelconque des revendications précédentes, dans lequel l'au moins une résistance comprend une batterie (230) de résistances ayant une pluralité de phases et le contacteur a une pluralité de phases, chaque phase du contacteur étant reliée à une phase de la batterie de résistances.

9. Système selon l'une quelconque des revendications précédentes, dans lequel le contacteur est un contacteur triphasé.

10. Système selon la revendication 9, dans lequel l'au moins une résistance est une batterie de résistances triphasées.

11. Système selon l'une quelconque des revendications précédentes, dans lequel les commandes du contrôleur donnent au contacteur l'instruction de se fermer, ce qui relie la batterie de résistances au moteur.

12. Procédé de freinage d'un moteur (210), le procédé consistant :
à faire détecter, par un entraînement à fréquence variable (220), une réduction de la demande (345) de vitesse, étant entendu que la réduction amorce une décélération du moteur ;
à faire émettre une commande par l'entraînement à fréquence variable en vue de fermer au moins un contacteur (240), étant entendu que le contacteur fermé relie une batterie de résistances (230) au moteur ;
à faire émettre une commande par l'entraînement à fréquence variable en vue de maintenir un niveau élevé de flux de moteur jusqu'à ce qu'un niveau de couple moteur sorti par le moteur soit approximativement nul, et
à faire absorber, par la batterie de résistances, le courant de décélération produit par le moteur.

13. Procédé selon la revendication 12, dans lequel l'émission d'une commande consiste à faire émettre une commande par l'entraînement à fréquence variable en vue de fermer au moins deux phases d'un contacteur triphasé (240), étant entendu que les au moins deux phases fermées du contacteur triphasé relient au moteur au moins deux phases d'une batterie de résistances (230).

14. Procédé selon la revendication 13, dans lequel une décision de fermer le contacteur triphasé est prise par l'entraînement à fréquence variable sur la base de la réduction détectée de la demande de vitesse.
